# EUROPEAN PATENT SPECIFICATION

(11) **EP 1 816 101 B1**
(45) Date of publication and mention of the grant of the patent: **22.08.2012**
(21) Application number: 05793493.7
(22) Date of filing: 17.10.2005
(51) Int. Cl.: F27B 9/10, F27B 9/36, F27B 9/39, F27D 7/06, F27D 17/00, H01M 8/06, C01B 3/34, B01J 8/06, C01B 3/38, F27D 7/00, F28F 21/04

(54) **INDUSTRIAL FURNACE WITH STEAM REFORMING APPARATUS AND METHOD FOR STEAM REFORMING USING THE SAME**
TECHNISCHER OFEN MIT DAMPFREFORMIERUNGSVORRICHTUNG UND VERFAHREN ZUR DAMPFREFORMIERUNG DAMIT
FOUR INDUSTRIEL AVEC APPAREIL DE REFORMAGE A LA VAPEUR ET PROCEDE DE REFORMAGE A LA VAPEUR UTILISANT LEDIT APPAREIL

(30) Priority: 26.10.2004 JP 2004310575
(43) Date of publication of application: 08.08.2007
(73) Proprietor: NGK Insulators, Ltd., Nagoya-shi, Aichi-ken 467-8530 (JP)
(72) Inventor: KURASHIMA, Yoshihiko, c/o NGK INSULATORS, LTD., Nagoya-shi, Aichi 4678530 (JP); HONDA, Toshihiko, c/o NGK INSULATORS, LTD., Nagoya-shi, Aichi 4678530 (JP)
(74) Representative: Paget, Hugh Charles Edward
(86) International application number: PCT/JP2005/019043
(87) International publication number: WO 2006/046426

(56) References cited:
- EP-A- 0 464 603
- EP-A- 1 650 518
- DE-A1- 2 923 596
- JP-A- 9 237 635
- JP-A- 2000 239 672
- JP-A- 2003 317 780
- US-A- 2 987 382
- US-A- 5 254 318
- MARSCHNER F ET AL: "Gas Production" ULLMANN'S ENCYCLOPEDIA OF INDUSTRIAL CHEMISTRY, 15 June 2000 (2000-06-15), pages 1-21, XP002253967 online

## Description

### Technical Field

The present invention relates to an industrial furnace having a steam reforming apparatus and a method for steam reforming using the same. More specifically, it relates to a furnace having a steam reforming apparatus configured to carry out steam reforming by efficiently using part of the combustion heat (waste heat) of the industrial furnace in accordance with the temperature range thereof, a method of carrying out steam reforming by using the steam reforming apparatus and efficiently using part of the combustion heat (waste heat) of an industrial furnace.

### Background Art

Industrial furnaces have been used as apparatuses for heating articles to be heated in various industrial fields. Some of these industrial furnaces are configured to heat an article to be heated by burning a carbon-containing fuel. They are configured to generate heat and a high-temperature combustion gas containing carbon dioxide upon combustion of the fuel. They are also configured to discharge the formed combustion gas out of the furnaces (hereinafter such a combustion gas discharged to the outside is also referred to as "exhaust combustion gas" or simply referred to as "exhaust gas"). Such high-temperature exhaust gases, for example, may adversely affect the environment, and this should be avoided. In addition, it is desirable to effectively recover and reuse heat (waste heat) of such an exhaust combustion gas.

Such a measure for recovering the heat of an exhaust combustion gas (waste heat) has not so often employed in kilns which are industrial furnaces with relatively small scales and are configured to sinter, for example, ceramics. These kilns have been configured to discharge a combustion gas used in heating of an article to be heated (article to be sintered or burned) as intact as an exhaust gas into the atmosphere. In contrast, there has been proposed a technique of recovering the heat energy of an exhaust gas discharged from a kiln main body by recycling the exhaust gas to the kiln main body (for example, Patent Document 1). According to this technique, part of the heat energy of the exhaust gas is recovered, and this saves the total amount of a fuel to be used. However, the energy is not satisfactorily efficiently recovered and the fuel is not sufficiently efficiently saved.
Patent Document 1: JP-A-2002-340482

US-A-5254318, DE-A-2923596 and US-A-2987382 show steam reforming apparatuses including tubular reactors. EP-A-464603 shows a glass making furnace including a steam reforming portion, heat exchanger and CO₂ recovery.

### Disclosure of Invention

The present invention has been made in consideration of the problems of the techniques in related art, and an object of the present invention is to provide an industrial furnace having a steam reforming apparatus that can carry out steam reforming by efficiently using part of the combustion heat (waste heat) of the industrial furnace in accordance with the temperature range of the heat, and a method for steam reforming using the industrial furnace including the steam reforming apparatus.

According to the present invention, therefore, there are provided an industrial furnace having a steam reforming apparatus, as set out in claim 1, and a method of generating the furnace as set out claim 2.

### Brief Description of the Drawings

Fig. 1 is a side view schematically illustrating an industrial furnace in the form of a kiln including a steam reforming apparatus according to the present invention.
Fig. 2 is a cross sectional view of the kiln taken along the line A-A in Fig. 1.
Fig. 3 is a block flow diagram schematically illustrating an embodiment of an industrial furnace (kiln) according to the present invention.
Fig. 4 is a graph showing the relation between the temperature and the tensile strength in a metal material and ceramic materials.
Fig. 5 is a graph showing the relation between the reforming temperature and the conversion ratio in a steam reforming reaction.

### Reference Numerals

- 1, 31: kiln main body
- 2, 32: sintering zone
- 3, 33: high-temperature cooling zone
- 4, 34: low-temperature cooling zone
- 5: heat-recovering section
- 6, 36: exhaust gas discharging section
- 7, 37: high-temperature region of discharging section
- 8, 38: low-temperature region of discharging section
- 11: moving direction of article to be sintered
- 12: article to be sintered
- 21, 41: steam reforming apparatus
- 22, 42: high-temperature reforming section
- 23, 43: low-temperature reforming section
- 24: ceramic tubular reactor
- 25: metal tubular reactor
- 26: reforming material inlet tube
- 27: reformed gas outlet tube
- 28: ceramic tube
- 29: metal tube
- 51: combustion device
- 52: hydrogen separator
- 53: carbon dioxide fixator
- 54: fuel cell
- 61: reformed gas
- 62: hydrogen fuel
- 63: residual gas
- 64: fuel mainly containing hydrocarbon for mixing
- 65: mixed fuel
- 66: hydrocarbon-containing fuel
- 67: fixating agent
- 68: waste liquid (solution containing sodium carbonate)
- 69: reforming material
- 70: hydrogen for fuel cell
- 71: hydrogen fuel for mixing
- 100, 200: kiln

### Best Mode for Carrying Out the Invention

Next, some modes for carrying out the present invention (hereinafter also referred to as "embodiment(s)") will be illustrated in detail by way of example with reference to the attached drawings.

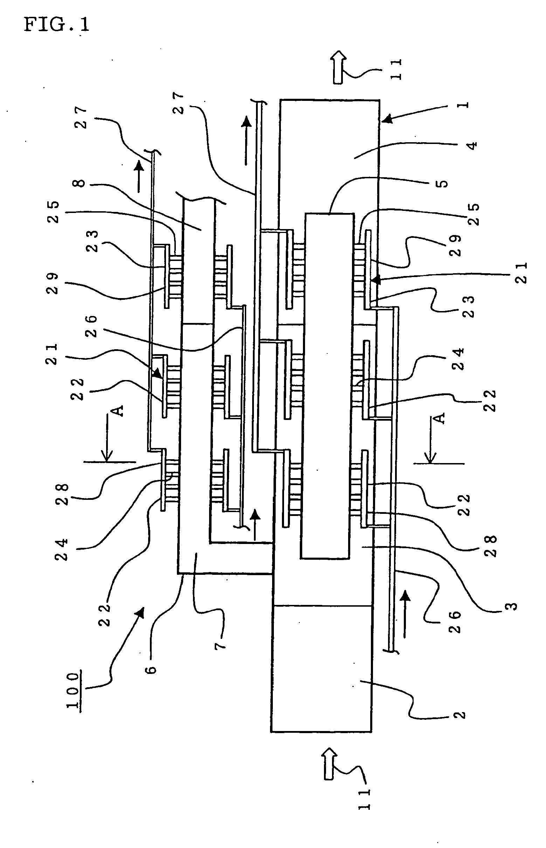

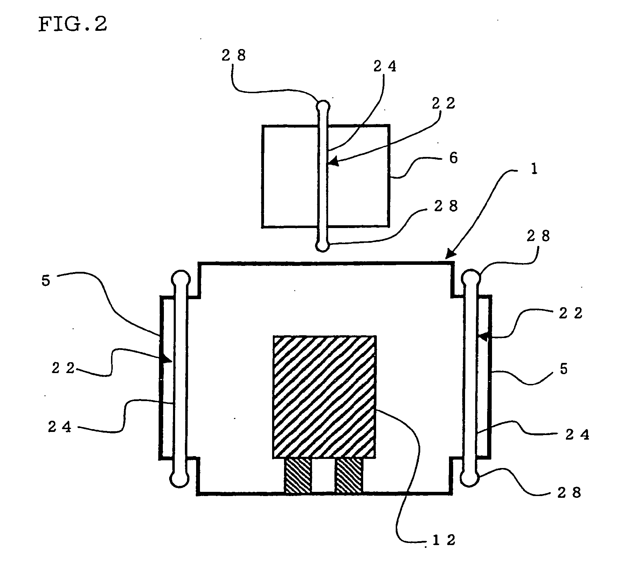

Fig. 1 is a side view schematically illustrating a kiln, including a steam reforming apparatus, according to the present invention, and Fig. 2 is a cross sectional view of the kiln taken along the line A-A in Fig. 1. In this embodiment, an industrial furnace is illustrated as a kiln by way of example, but the industrial furnace is not limited thereto. The term "industrial furnace" as used herein refers to a furnace for industrial use capable of housing an article to be heated and heating the article. In Fig. 2, a reforming material inlet tube 26 connected to a ceramic tube 28 of a high-temperature reforming section 22 is not shown. The arrows in Figs. 1 and 2 indicate directions of the movements of a reforming material and a reformed gas.

With reference to Fig. 1, a steam reforming apparatus 21 in this embodiment includes a low-temperature reforming section 23 and a high-temperature reforming section 22. The low-temperature reforming section 23 includes metal tubular reactors 25 housing a reforming catalyst for accelerating a steam reforming reaction. The high-temperature reforming section 22 includes ceramic tubular reactors 24. With reference to Fig. 2, the steam reforming apparatus 21 is arranged in a heat-recovering section 5 so that the metal tubular reactors 25 (Fig. 1) and the ceramic tubular reactors 24 each extend vertically. The heat-recovering section 5 is arranged on both sides of a kiln main body 1 of a kiln 100 so as to protrude outward. The metal tubular reactors 25 (Fig. 1) and the ceramic tubular reactors 24 are preferably arranged so as to extend vertically, but the arrangements of them are not limited thereto, and they can be arranged in arbitrary directions. The heat-recovering section 5 is arranged on both sides of the kiln main body 1 but may be arranged on one side thereof. With reference to Fig. 1, the low-temperature reforming section 23 is arranged in a heat-recovering section 5 of a low-temperature cooling zone 4, and the high-temperature reforming section 22 is arranged in a heat-recovering section 5 of a high-temperature cooling zone 3. The steam reforming apparatus 21 is arranged in the heat-recovering section 5, but it may also be arranged directly in the kiln main body 1 without arranging a heat-recovering section 5. The temperature of the low-temperature cooling zone 4 is preferably 600°C or higher and lower than 1000°C. The temperature of the high-temperature cooling zone 3 is preferably 1000°C or higher and 1800°C or lower. In addition, another steam reforming apparatus 21 is arranged in an exhaust gas discharging section 6 so that metal tubular reactors 25 and ceramic tubular reactors 24 extend vertically. The exhaust gas discharging section 6 is configured to act as a passage of a combustion gas (exhaust combustion gas) discharged from the kiln main body 1. The low-temperature reforming section 23 is arranged in a low-temperature region 8 of the exhaust gas discharging section 6, and the high-temperature reforming section 22 is arranged in a high-temperature region 7 of the exhaust gas discharging section 6. The temperature of the low-temperature region 8 of the discharging section is preferably 600°C or higher and lower than 1000°C. The temperature of the high-temperature region 7 of the discharging section is preferably 1000°C or higher and 1800°C or lower.

The steam reforming apparatus 21 is placed in the kiln 100. The kiln 100 includes a combustion device (not shown), the kiln main body 1, and the exhaust gas discharging section 6. A hydrocarbon-containing fuel is fed to the combustion device, and the combustion device is configured to burn the fed fuel to thereby yield a combustion gas. An article to be sintered is transported to the kiln main body 1, and the kiln main body 1 is configured to heat and sinter the transported article to be sintered by the action of the combustion gas and to discharge the combustion gas after sintering to the outside. The exhaust gas discharging section 6 is configured to act as a passage of the combustion gas discharged from the kiln main body 1. The kiln 100 is configured to burn a hydrocarbon-containing fuel such as natural gas or methane gas by the action of the combustion device to yield a combustion gas and combustion heat, so as to sinter an article to be sintered 12 (Fig. 2) in a sintering zone 2. After sintering the article to be sintered 12 in the sintering zone 2, the combustion gas moves in the high-temperature cooling zone 3 while gradually being cooled and further moves to the low-temperature cooling zone 4 while being further cooled. The combustion gas cooled in the low-temperature cooling zone 4 is discharged as an exhaust combustion gas through a low-temperature gas discharging section (not shown) out of the kiln main body 1. The low-temperature gas discharging section is arranged in the low-temperature cooling zone 4. The low-temperature cooling zone 4 is such a region as to have temperatures of lower than 1000°C, and the high-temperature cooling zone 3 is such a region as to have temperatures of 1000°C or higher. The article to be sintered 12 also moves in a moving direction 11 of the article to be sintered 12. Specifically, the article to be sintered 12 is transported from the sintering zone 2 to the high-temperature cooling zone 3, is further transported to the low-temperature cooling zone 4, and is transported to the outside. The kiln 100 includes the exhaust gas discharging section 6 arranged in the high-temperature cooling zone 3. The exhaust gas discharging section 6 is configured to discharge a high-temperature combustion gas from the high-temperature cooling zone 3 of the kiln main body 1. Part of the high-temperature combustion gas in the high-temperature cooling zone 3 is discharged through the exhaust gas discharging section 6 out of the kiln main body 1. In the exhaust gas discharging section 6, an exhaust combustion gas (combustion gas discharged out of the kiln main body 1) passes through the hollow space in the exhaust gas discharging section 6, is cooled therein, and is discharged to the outside. The exhaust gas discharging section 6 includes a high-temperature region 7 and a low-temperature region 8. The high-temperature region 7 of the discharging section is arranged proximal to the kiln main body 1 and is a region where the exhaust combustion gas has a temperature of 1000°C or higher. The low-temperature region 8 of the discharging section is arranged distal to the kiln main body 1 and is a region where the exhaust combustion gas has a temperature of lower than 1000°C.

The steam reforming apparatus 21 in this embodiment is configured to heat the metal tubular reactors 25 using part of the combustion heat and simultaneously cause a steam reforming reaction in the low-temperature reforming section 23. The steam reforming reaction is carried out using, as raw materials, a hydrocarbon and steam fed into the metal tubular reactors 25 so as to yield a reformed gas containing hydrogen and carbon dioxide. The steam reforming apparatus 21 is also configured to heat the ceramic tubular reactors 24 using part of the combustion heat and simultaneously cause a steam reforming reaction in the high-temperature reforming section 22. This steam reforming reaction is carried out using, as raw materials, a hydrocarbon and steam fed into the ceramic tubular reactors 24 so as to yield a reformed gas containing hydrogen and carbon dioxide. In such a steam reforming reaction, a hydrocarbon is reacted with steam while the reforming material containing the hydrocarbon and steam is heated with part of combustion heat so as to yield a reformed gas containing hydrogen and carbon dioxide. In a low-temperature region where the reactivity is low, a steam reforming reaction is carried out by the catalysis of a reforming catalyst. Heating with part of the combustion heat may be carried out by direct heating or radiation heating. In the direct heating, an article is directly heated as a result of the contact with a combustion gas (including an exhaust combustion gas) after sintering an article to be sintered. In the radiation heating, the article to be sintered, sintering jigs, and furnace walls in the kiln main body 1, and the wall of exhaust gas discharging section 6 are heated by the combustion gas and thereby emit radiant heat, and the radiant heat heats the reforming material. When a reforming reaction occurs at 600°C or higher, the ratio of the heat in heating by the radiant heat transmission (radiant heat) to the heat in heating by the combustion gas is preferably within a range of 1:10 to 4:1. The radiant heat begins to be emitted at about 600°C. At relatively low temperatures, the radiant heat does not substantially be emitted and the intensity thereof is about one-tenths of convective heat. The ratio of the radiant heat to the total thermal dose (total heat) is 60% at 800°C and is 80% at 1000°C or higher. The radiant heat becomes more predominant with higher temperature.

As is described above, the steam reforming apparatus 21 in this embodiment includes the low-temperature reforming section 23 and the high-temperature reforming section 22, the low-temperature reforming section 23 has the metal tubular reactors 25 housing a reforming catalyst, and the high-temperature reforming section 22 includes the ceramic tubular reactors 24. The steam reforming apparatus is placed in the kiln 100 so that the low-temperature reforming section 23 is arranged in a low-temperature region (the low-temperature cooling zone 4) and that the high-temperature reforming section 22 is arranged in a high-temperature region (the high-temperature cooling zone 3) in the kiln 100. Accordingly, the waste heat can efficiently be recovered in a low-temperature region, although the reactivity of a steam reforming reaction is low in such a low-temperature region, because a reforming catalyst effectively acts. The waste heat can also efficiently be recovered even in the absence of a reforming catalyst in a high-temperature region because the reactivity of a steam reforming reaction is high in such a high-temperature region.

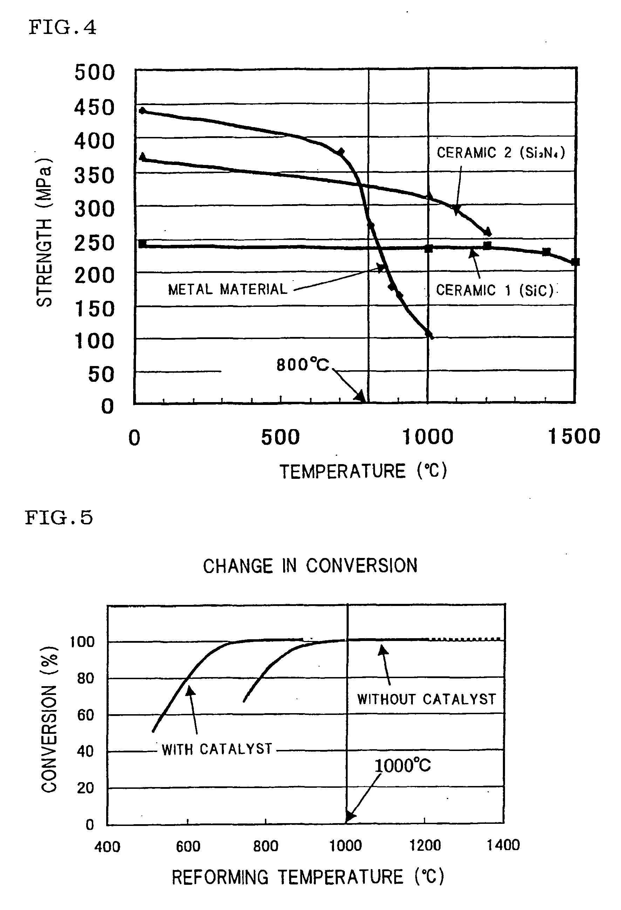

In this connection, metal tubular reactors used in related art have insufficient thermal stability. For example, a metal material has significantly decreased strength at temperatures higher than 800°C and has strength of about 100 MPa at 1000°C as shown in Fig. 4. Accordingly, an actual steam reforming apparatus must be operated at a controlled operation temperature of about 800°C to about 900°C. The temperature of 1000°C refers to temperature at which such a metal tubular reactor can be used, and, if a metal tubular reactor is continuously operated at 1000°C, it may possibly be broken due to decreased strength thereof. Fig. 5 shows change of the conversion ratio and demonstrates that, at a temperature equal to or lower than the temperature where a metal tubular reactor can be used, i.e., 1000°C, the conversion decreases when no catalyst is used, and therefore a catalyst should essentially be used to compensate the decrease in conversion. Fig. 4 is a graph showing the relation between the temperature and the strength in a metal material and ceramic materials, and Fig. 5 is a graph showing the relation between the reforming temperature and the conversion rate (reaction rate of material methane) in a steam reforming reaction. The data on strength of the ceramic materials in Fig. 4 are based on "Handbook of Ceramic Engineering, edited by The Ceramic Society of Japan (1989), page 2018 and page 2080". These data were converted from bending strength into tensile strength. They were converted by converting a high-temperature bending strength into a high-temperature tensile strength using the ratio of the bending strength to the tensile strength at room temperature shown in this document. The data on tensile strength (strength) of a metal are data of a Fe-Ni-Cr-Nb austenite alloy generally used in a steam reforming tube and are determined by a method in accordance with Japanese Industrial Standards (JIS) Z-2241.

In contrast, ceramics have strength gradually decreasing with an elevating temperature from room temperature, but Ceramic 1 (silicon carbide: SiC) and Ceramic 2 (silicon nitride: Si₃N₄) have strength of 200 MPa at 1500°C and strength of about 250 MPA at 1200°C, respectively, which are substantially equivalent to the strength of metals (about 200 MPa to 250 MPa) at regular temperatures in steam reforming (800°C to 900°C) (Fig. 4). Accordingly, ceramic materials can be used as tubular reactors even at temperatures of 1000°C or higher where it is impossible to use metal materials. In contrast, there is no need of using a catalyst at 1000°C or higher, because the conversion is 100% even in the absence of a catalyst at temperatures of 1000°C or higher, as shown in Fig. 5. In addition, it is difficult to use a reforming catalyst at such high temperatures. A reforming catalyst generally includes catalytic metal nickel particles dispersed on an alumina carrier, and the nickel particles gradually undergo sintering and become coarse at 1000°C or higher. Such coarse nickel particles have reduced specific surface areas and show decreased reactivity. That is, catalysts generally have heat resistance up to about 1000°C, and it is impossible to use such catalysts at temperatures of 1000°C or higher, while the heat resistance somewhat varies depending on the type of a metal. Thus, steam reforming can be carried out even at temperatures of 1000°C or higher by using a ceramic tube, whereas metal tubular reactors and catalysts can not be used at such high temperatures.

The steam reforming apparatus 21 in this embodiment uses the ceramic tubular reactors 24 excellent in thermal stability as described above, can thereby recover waste heat effectively, and can carry out a steam reforming reaction even in a region at high temperatures. Since such ceramic tubular reactors 24 are fragile, they have not been used as tubular reactors for a steam reforming reaction. Ceramic tubular reactors can be, however, used as tubular reactors for a steam reforming reaction, for example, by embedding them in a heat resisting brick or a thermally stable layer of a packed alumina fiber; by covering with a thermally stable cloth made of an alumina fiber; by placing a metal tube within a ceramic tube to form a two-layer structure tube; or by forming a composite tubular member containing a fiber dispersed in a ceramic. In addition, the use of a reforming catalyst can be avoided in a high-temperature region, because a steam reforming reaction satisfactorily proceeds even in the absence of a reforming catalyst in a high-temperature region. This avoids clogging of the tubular reactor or the deactivation of a reforming catalyst. Such clogging or deactivation is caused by carbon which is deposited in the tubular reactor as a result of heat decomposition of a hydrocarbon. In addition there is no need of exchanging a catalyst in a high-temperature reforming section. This eliminates time loss caused by exchanging a catalyst and eliminates the procedures of, for example, cooling and reheating the ceramic tubular reactor upon exchange of a catalyst. The cost of the reforming catalyst itself is reduced, because the amount of the reforming catalyst in the entire steam reforming apparatus 21 is reduced.

A kiln is used as an industrial furnace in this embodiment. When a combustion furnace for burning an article to be heated is used as an industrial furnace, ceramic tubular reactors are preferably used both in a high-temperature reforming section and in a low-temperature reforming section. When an industrial furnace is a combustion furnace, gases in the industrial furnace and an exhaust gas from the industrial furnace may contain various corrosive components. These components are generally rendered harmless after being discharged from the furnace and are emitted. On the other hand, heat is preferably recovered in the furnace or immediately after discharging from the furnace so as to recover and use the energy of waste heat more efficiently. A tubular reactor, if arranged in an atmosphere containing corrosive components, must include a corrosion-resistant material. Metals may not be used due to corrosion even at temperatures lower than their allowable temperature limits (about 1000°C) under some conditions upon use. Some ceramics, however, can be used even under such severe conditions. For example, a silicon carbide (SiC) material can be used up to 870°C in the presence of SO₂ gas, and silicon nitride Si₃N₄ is usable up to 900°C in the presence of Cl₂ gas and is usable up to 1000°C in the presence of H₂S gas. Alumina (Al₂O₃) is resistant to HCl, S, and SO₂ (Handbook of Ceramic Engineering, edited by The Ceramic Society of Japan (1989), page 2079 and page 2081). Thus, steam reforming can be carried out, and the waste heat of the furnace can be effectively used under conditions where metal tubular reactors are not usable even at temperatures lower than 1000°C. This can be achieved by using a ceramic tubular reactor made from a ceramic material in accordance with a contained corrosive component. When a kiln is used as an industrial furnace, a low-temperature reforming section preferably includes a metal tubular reactor in view of economical efficiency as described above, but it may include a ceramic tubular reactor. Even if a kiln is used as an industrial furnace, the low-temperature reforming section preferably includes a ceramic tubular reactor when an atmosphere in the low-temperature reforming section may cause corrosion. The tubular reactors of the present invention are selected in accordance with claim 1.

In Fig. 1, the steam reforming apparatus 21 is arranged both in the kiln main body 1 and the exhaust gas discharging section 6. However, the steam reforming apparatus 21 may be arranged in either one of the two. It is also acceptable to arrange the high-temperature reforming section 22 in one of the kiln main body 1 and the exhaust gas discharging section 6 and to arrange the low-temperature reforming section 23 in the other.

With reference to Figs. 1 and 2, the low-temperature reforming section 23 of the steam reforming apparatus 21 in this embodiment includes plural metal tubular reactors 25 arranged substantially in parallel. Both ends of the plural metal tubular reactors arranged in line are connected to sides of metal tubes 29, respectively, so that the insides of the respective tubes communicate with each other. Likewise, the high-temperature reforming section 22 includes plural ceramic tubular reactors 24 arranged substantially in parallel. Both ends of the plural ceramic tubular reactors 24 arranged in line are connected to sides of ceramic tubes 28, respectively, so that the insides of the respective tubes communicate with each other.

The sizes and numbers of metal tubular reactors and ceramic tubular reactors can be set as appropriate according to the size of the kiln, the amount of the combustion gas, the temperature of the combustion gas, and locations of the tubular reactors. Such tubular reactors may have a simple cylindrical form but may also have, for example, protrusions or blades on their outer surface. The resulting tubular reactors have increased heat-receiving areas and thereby receive increased heat per unit length of the reforming tubes. In addition, a shape having the length necessary for a predetermined reaction quantity may be employed.

With reference to Fig. 1, a reforming material inlet tube 26 is connected to a metal tube 29 connected to one end of the low-temperature reforming section 23, and a reformed gas outlet tube 27 is connected to a metal tube 29 connected to the other end in the steam reforming apparatus 21 according to this embodiment. The steam reforming apparatus 21 is so configured as follows. A reforming material containing a hydrocarbon and steam is fed through the reforming material inlet tube 26 into the metal tubular reactor 25; a steam reforming reaction is caused in the metal tubular reactor 25 to yield a reformed gas containing hydrogen and carbon dioxide; and the reformed gas is discharged through the a reformed gas outlet tube 27. Likewise, in the high-temperature reforming section 22, a reforming material inlet tube 26 is connected to a ceramic tube 28 connected to one end of the high-temperature reforming section 22, and a reformed gas outlet tube 27 is connected to a ceramic tube 28 connected to the other end. The apparatus is preferably so configured that a hydrocarbon and steam fed from a hydrocarbon feeder (not shown) and a steam feeder (not shown), respectively, are mixed in a mixer (not shown) to yield a reforming material, and the reforming material as a mixture is fed through the reforming material inlet tube 26. The hydrocarbon feeder for use herein is not specifically limited and can be one generally used. For example, a town gas, if used as a hydrocarbon material, can be fed from an existing gas pipe. Alternatively, if no gas pipe is arranged, the town gas may be fed from a pipe from a gas tank separately arranged. Likewise, another hydrocarbon material such as a liquefied petroleum gas (LPG) or kerosene may be fed by arranging a pipe or fed from a reservoir such as a tank or a cylinder through a pipe. When a material is in a liquid state, it may be converted into a gas by heating or another means before feeding into reforming tubes. The pressure of a material gas may be increased using a booster pump according to necessity. This is effective to increase the reaction quantity. The steam feeder is not specifically limited and can be one generally used. Examples of the steam feeder include a regular steam boiler, and a wasteheat boiler using waste heat from a heat source such as a furnace. When the system includes a fuel cell, it is acceptable to use the waste heat of the fuel cell to yield steam to be fed.

In the steam reforming apparatus 21 of this embodiment, the ceramic tubular reactor 24 preferably includes, as a material, at least one selected from the group consisting of silicon nitride, silicon carbide, aluminum nitride, aluminum oxide, and zirconium oxide. By using such a thermally stable ceramic, steam reforming at high temperatures can be carried out.

Materials for the metal tubular reactor 25 include SUS309, SUS310, SCH22CF (HK 40), SCH24CF (HP), and HA230.

The ceramic tubular reactor 24 may be corroded in some atmospheres in the kiln 100 even though it has corrosion resistance. Likewise, the metal tubular reactor 25 may be corroded. When such a tubular reactor is corroded by an atmosphere in the kiln 100, it is preferred to form a hole in a heat resisting brick for the ceramic tubular reactor 24 or the metal tubular reactor 25 and to place the ceramic tubular reactor 24 or the metal tubular reactor 25 in the hole of the brick. Thus, part of combustion heat is transmitted to the ceramic tubular reactor 24 or the metal tubular reactor 25 as a result of the thermal conduction of the heat resisting brick. In contrast, the ceramic tubular reactor 24 or the metal tubular reactor 25 does not undergo corrosion because an atmosphere containing a corrosive component is blocked by the heat resisting brick.

A reforming catalyst to be housed in the metal tubular reactor 25 is preferably a nickel-containing catalyst such as Synetix catalyst available from Johnson Matthey Inc. Other effective catalysts include nickel catalysts, copper catalysts, transition metal catalysts, and platinum catalysts. A steam reforming reaction using a nickel-containing catalyst is preferably one using an "ICI process" in which methane (1 mole) and water (2 moles) are subjected to an endothermic reaction in the presence of a nickel-containing catalyst at a temperature of 700°C to 950°C and a pressure of 1.01x 10⁵ to 40.52x 10⁵ N/m² to yield hydrogen (4 moles) and carbon dioxide (1 mole).

The reaction rate between a hydrocarbon and water in the steam reforming apparatus 21 is preferably 50 percent by mole or more. If the reaction rate is less than 50 percent by mole, the amount of a fuel to be used may increase. The higher the reaction rate between a hydrocarbon and water is the better. The reaction rate between a hydrocarbon and water is the ratio of a theoretical amount of hydrogen to be formed to the amount of hydrogen actually formed.

A reformed gas generated in the steam reforming apparatus 21 preferably has a hydrogen content of 10 to 80 percent by mole and a carbon dioxide content of 1 to 20 percent by mole.

Hydrocarbons for use as a material for a steam reforming reaction in this embodiment include, for example, methane, ethane, propane, and butane, of which methane is preferred.

A steam reforming reaction, if carried out in the ceramic tubular reactor 24, is preferably carried out by reacting a hydrocarbon and water under conditions at 1000°C or higher and 1800°C or lower to yield hydrogen and carbon dioxide.

Next, an embodiment of a steam reforming method according to the present invention will be illustrated. In a steam reforming method according to this embodiment, part of the combustion heat of a kiln is recovered using the steam reforming apparatus according to the present invention. This embodiment is illustrated by taking a kiln as an example of an industrial furnace, but the industrial furnace is not limited thereto.

A steam reforming method according to this embodiment uses a kiln including a steam reforming apparatus according to the present invention. The steam reforming apparatus is arranged in the kiln so that a low-temperature reforming section is arranged in a location which will have a temperature of 600°C or higher and lower than 1000°C by the action of combustion heat (including combustion waste heat), and a high-temperature reforming section is arranged in a location which will have a temperature of 1000°C or higher and 1800°C or lower by the action of the combustion heat of the kiln. A steam reforming reaction is caused while heating the low-temperature reforming section in a location of the kiln at a temperature of 600°C or higher and lower than 1000°C. Another steam reforming reaction is caused while heating the high-temperature reforming section in a location of the kiln at a temperature of 1000°C or higher and 1800°C or lower. Thus, part of the combustion heat of the kiln is recovered. The configuration and working conditions, for example, of a steam reforming apparatus for use in a steam reforming method according to this embodiment are as with the steam reforming apparatus shown in Fig. 1. In the steam reforming apparatus shown in Fig. 1, the steam reforming apparatus 21 is arranged both in the kiln main body 1 and in the exhaust gas discharging section 6, but it may be arranged in either one of the kiln main body 1 and in the exhaust gas discharging section 6. It is also acceptable to arrange the high-temperature reforming section 22 in one of the kiln main body 1 and the exhaust gas discharging section 6 and to arrange the low-temperature reforming section 23 in the other.

A method for steam reforming according to this embodiment uses the steam reforming apparatus described above and recovers part of the combustion heat of a kiln by causing a steam reforming reaction in a location of the kiln at a temperature of 600°C or higher and lower than 1000°C while heating the low-temperature reforming section, and by causing a steam reforming reaction in a location of the kiln at a temperature of 1000°C or higher and 1800°C or lower while heating the high-temperature reforming section. Accordingly, the waste heat can efficiently be recovered in a location at 600°C or higher and lower than 1000°C, although the reactivity of a steam reforming reaction is low in such a low-temperature region, because a reforming catalyst effectively acts. The waste heat can also efficiently be recovered even in the absence of a reforming catalyst in a location at 1000°C or higher and 1800°C or lower because the reactivity of a steam reforming reaction is high in such a high-temperature region. In addition, the advantages obtained by using the steam reforming apparatus described can also be obtained.

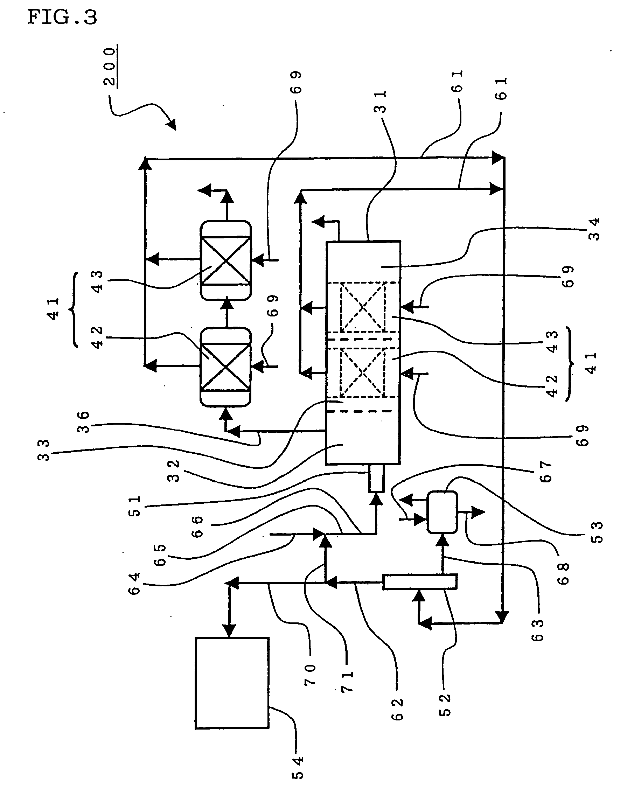

Next, an embodiment of an industrial furnace according to the present invention will be described. Fig. 3 is a block flow diagram schematically illustrating an embodiment of an industrial furnace according to the present invention. This embodiment will be described by taking a kiln as an industrial furnace by way of example, but the industrial furnace is not limited to such a kiln. The arrows in Fig. 3 indicate the movements of a reforming material and a reformed gas.

With reference to Fig. 3, a kiln 200 includes a kiln main body 31, an exhaust gas discharging section 36, and a combustion device 51. The kiln main body 31 includes one unit of the above-mentioned steam reforming apparatus 41. The steam reforming apparatus 41 includes a high-temperature reforming section 42 and a low-temperature reforming section 43. The exhaust gas discharging section 36 includes another unit of the steam reforming apparatus 41 according to the present invention. The combustion device 51 is configured to burn an incoming hydrocarbon-containing fuel 66 to thereby yield a combustion gas. The hydrocarbon-containing fuel 66 preferably contains methane as a hydrocarbon. The kiln main body 31 is configured to heat and sinter an incoming article to be sintered by the action of the combustion gas and to discharge the combustion gas after sintering through the exhaust gas discharging section 36 to the outside. The kiln 200 according to this embodiment is configured as follows. The combustion device 51 is arranged in a sintering zone, and the combustion gas yielded in the combustion device 51 heats the furnace wall and other components of the kiln main body 31 to yield radiant heat. The combustion gas and the radiant heat act to burn the article to be sintered. The combustion gas after sintering moves to a high-temperature cooling zone 33 while being gradually cooled, and further moves to a low-temperature cooling zone 34 while being further cooled. The combustion gas after moving to the low-temperature cooling zone 34 and becoming a low-temperature gas is discharged as a low-temperature exhaust gas from the low-temperature cooling zone to the outside. The low-temperature cooling zone 34 is a region at temperatures of lower than 1000°C, and the high-temperature cooling zone 33 is a region at temperatures of 1000°C or higher.

With reference to Fig. 3, the steam reforming apparatus 41 is arranged in the kiln main body 31 and/or in a passage (the exhaust gas discharging section 36) for a combustion gas (exhaust combustion gas) discharged from the kiln main body 31 in the kiln 200 according to this embodiment. The steam reforming apparatus 41 is so arranged that the low-temperature reforming section 43 is arranged in the low-temperature cooling zone 34 and that the high-temperature reforming section 42 is arranged in the high-temperature cooling zone 33. The low-temperature cooling zone 34 is such a region as to have a temperature of 600°C or higher and lower than 1000°C by the action of the combustion heat of the kiln 200. The high-temperature cooling zone 33 is such a region as to have a temperature of 1000°C or higher and 1800°C or lower by the action of the combustion heat of the kiln 200.

The condition (configuration) of the steam reforming apparatus 41 to be arranged in the kiln main body 31 and the exhaust gas discharging section 36 in Fig. 3 is as with the condition (configuration) of the steam reforming apparatus 21 to be arranged in the kiln main body 1 in Fig. 1. The steam reforming apparatus 41 is arranged both in the kiln main body 31 and the exhaust gas discharging section 36, but may be arranged either one of them. It is also acceptable to arrange the high-temperature reforming section 42 in one of the kiln main body 31 and the exhaust gas discharging section 36 and to arrange the low-temperature reforming section 43 in the other.

As is described above, the kiln 200 according to this embodiment includes the steam reforming apparatus 41 arranged in the kiln main body 31 and/or the exhaust gas discharging section 36. In addition, the steam reforming apparatus 41 is so arranged that the low-temperature reforming section 43 is arranged in such a location as to have a temperature of 600°C or higher and lower than 1000°C by the action of the combustion heat of the kiln 200, and that the high-temperature reforming section 42 is arranged in such a location as to have a temperature of 1000°C or higher and 1800°C or lower by the action of the combustion heat of the kiln 200. Accordingly, the waste heat can efficiently be recovered in a location at 600°C or higher and lower than 1000°C, although the reactivity of a steam reforming reaction is low in such a low-temperature region, because a reforming catalyst effectively acts. The waste heat can also efficiently be recovered even in the absence of a reforming catalyst in a location at 1000°C or higher and 1800°C or lower because the reactivity of a steam reforming reaction is high in such a high-temperature region. In addition, the advantages obtained by using the steam reforming apparatus 41 can also be obtained.

The steam reforming apparatus 41 in the kiln 200 according to this embodiment is configured as to be heated by part of the combustion heat to cause a steam reforming reaction as in the above-mentioned steam reforming apparatus. The part of the combustion heat herein includes a directly received heat and a radiant-heat-derived heat. Specifically, the combustion gas comes in direct contact with a metal tubular reactor and a ceramic tubular reactor to give heat to the metal tubular reactor and the ceramic tubular reactor. In addition, the combustion gas heats inside the kiln 200, the heated kiln wall and other members emit radiant heat inward the kiln 200, and the metal tubular reactor and the ceramic tubular reactor receive part of the radiant heat.

The configuration and working conditions of the steam reforming apparatus 41 in the kiln 200 according to this embodiment are as with the configuration and working conditions of the above-mentioned steam reforming apparatus. When a kiln is used as an industrial furnace, a low-temperature reforming section preferably includes a ceramic tubular reactor as in the steam reforming apparatus described above.

With reference to Fig. 3, the kiln 200 according to this embodiment preferably further includes a hydrogen separator 52, a carbon dioxide fixator 53, and a fuel cell 54. In this case, a reformed gas 62 formed in the steam reforming apparatus 41 is fed to the hydrogen separator 52, and the hydrogen separator 52 is configured to separate hydrogen in the reformed gas 61 selectively to yield a hydrogen fuel 62 mainly containing hydrogen, and a residual gas 63 containing carbon dioxide. The carbon dioxide fixator 53 is configured to fix carbon dioxide in the residual gas 63 so as to prevent carbon dioxide from being discharged in the form of a gas to the outside, the residual gas having been separated in the hydrogen separator 52. The fuel cell 54 is configured to generate electricity by a reaction between hydrogen and oxygen, or by reactions between hydrogen and oxygen and between hydrogen and carbon dioxide.

The kiln 200 according to this embodiment is preferably so configured as to burn a mixed fuel 65 in the combustion device 51 to yield a combustion gas to thereby reduce the content of carbon dioxide in the combustion gas. The mixed fuel 65 herein is a mixture of a hydrocarbon-containing fuel for mixing 64 and a hydrogen fuel 62. The hydrocarbon-containing fuel for mixing 64 mainly contains a hydrocarbon, and the hydrogen fuel 62 has been separated in the hydrogen separator 52. Specifically, the kiln 200 preferably uses the mixed fuel 65 as a hydrocarbon-containing fuel 66. This reduces the amount of carbon dioxide discharged to the outside when the combustion gas is discharged as an exhaust gas to the outside. The hydrocarbon-containing fuel for mixing 64 preferably contains methane as a hydrocarbon. The kiln 200 is so configured to feed sodium hydroxide as a fixating agent 67 to the carbon dioxide fixator 53 for the fixation of carbon dioxide, and the carbon dioxide fixator 53 is so configured as to bring the fixating agent 67 into contact with the residual gas 63 therein, to allow the fixating agent 67 to absorb carbon dioxide contained in the residual gas 63 to yield sodium carbonate, and to discharge a waste liquid 68 containing sodium carbonate to the outside. The hydrocarbon-containing fuel for mixing 64 preferably has a hydrocarbon content of 80 percent by volume or more. The fixating agent 67 is not specifically limited as long as it can react with carbon dioxide or absorb carbon dioxide. Examples thereof include NaOH and Mg(OH)₂. The respective devices or units are connected with each other through predetermined pipes, and fuels and other components flow and move in the pipes.

As is described above, a kiln 200 according to this embodiment uses, in a preferred embodiment, the mixed fuel 65 as the hydrocarbon-containing fuel 66 to be burnt in the combustion device 51, the mixed fuel 65 being a mixture of the hydrocarbon-containing fuel for mixing 64 and the hydrogen fuel 62. This reduces the formation of carbon dioxide proportionally to the content of hydrogen (hydrogen fuel 62) contained in the mixed fuel 65. In this connection, hydrogen does not cause carbon dioxide even when it is burnt. The hydrogen content (the ratio of hydrogen to the mixed fuel) of the mixed fuel 65 is preferably 5 to 95 percent by volume and more preferably 25 to 75 percent by volume. If the hydrogen content is less than 5 percent by volume, carbon dioxide may not sufficiently effectively be reduced. If it exceeds 95 percent by volume, a steam reforming reaction may require an extra heat source in addition to part of the combustion heat. A reaction of the reforming material 69 by the catalysis of a reforming catalyst yields carbon dioxide. The carbon dioxide derived from the reforming material 69, however, is fixed by the action of the carbon dioxide fixator 53, and gaseous carbon dioxide is not discharged to the outside. The reaction of the reforming material 69 by the catalysis of a reforming catalyst is an endothermic reaction and requires heat. The kiln 200 uses, as the required heat, part of the combustion heat discharged from the kiln main body 31. Specifically, part of the waste heat can effectively be recovered as a combustion heat for burning a fuel. This reduces the total amount of a fuel to be used.

The kiln 200 is preferably so configured as to use part of the hydrogen fuel 62 separated in the hydrogen separator 52 as a hydrogen material 70 for fuel cell and to feed the hydrogen material 70 to the fuel cell 54 to thereby generate electricity, as shown in Fig. 3. It is also acceptable to feed the reformed gas 61, which is discharged from the steam reforming apparatus 41, directly to the fuel cell 54 without the interposition of the hydrogen separator 52. By using the hydrogen fuel 62 separated in the hydrogen separator 52 as a hydrogen material (hydrogen fuel), the fuel cell 54 can efficiently generate electricity because the hydrogen fuel 62 contains hydrogen with a high purity. When a fuel cell is allowed to generate electricity using a regular hydrogen material, for example, it shows a thermal efficiency of about 40%. In contrast, the fuel cell 54 used in this embodiment shows a dramatically increased thermal efficiency of 60% to 70%. The kiln 200 may be so configured as to use, as a hydrogen fuel 71 for mixing, part of the hydrogen fuel 62, which is separated in the hydrogen separator 52; to burn the hydrogen fuel 71 for mixing ultimately in the combustion device 51; and to use the remainder of the hydrogen fuel 62 as the hydrogen material 70 for fuel cell in the electricity generation of the fuel cell 54. This reduces carbon dioxide contained in the exhaust combustion gas and effectively recovers part of the heat of the combustion gas to be used in electricity generation.

When the reformed gas 61 discharged from the steam reforming apparatus 41 is directly used as intact in the fuel cell 54 without the interposition of the hydrogen separator 52, hydrogen in the reformed gas 61 is used in electricity generation, and a residual gas is discharged from the fuel cell 54. The residual gas is preferably mixed with a fuel and is burnt in a combustion device. When part or all of the hydrogen fuel 62 separated in the hydrogen separator 52 is used in the fuel cell 54, a residual gas is discharged from the fuel cell 54. This residual gas is also preferably mixed with a fuel and is burnt in the combustion device 51.

When a residual gas discharged from the fuel cell contains carbon dioxide and the kiln 200 uses a carbon dioxide fixator, the residual gas discharged from the fuel cell is preferably fed to the carbon dioxide fixator to remove carbon dioxide before being mixed with a fuel and burnt in the combustion device.

The hydrogen fuel 62 may be used as intact as the hydrogen fuel 71 for mixing or may be separated into the hydrogen fuel 71 for mixing and the hydrogen material 70 for fuel cell. In the latter case, the ratio of the hydrogen fuel 71 for mixing to the hydrogen material 70 for fuel cell is not specifically limited and may be set in balance so as to optimize the discharge of carbon dioxide and the electricity generated.

The kiln main body 31 in the kiln 200 according to this embodiment shown in Fig. 3 is not specifically limited. It can be a generally used kiln main body. In this case, the kiln 200 is configured to transport an article to be sintered, such as a ceramic, to the kiln main body, and the kiln main body is configured to burn the hydrocarbon-containing fuel 66 by the action of the combustion device 51 to yield a combustion gas, and to sinter the article to be sintered, such as a ceramic, by the action of the combustion gas. The article to be sintered is preferably a ceramic honeycomb structure. The ceramic honeycomb structure herein is a ceramic having a honeycomb structure and including plural cells. These cells are partitioned by partitioning walls and are configured to be passages for a fluid. The kiln main body 31 may be of a batch system but is preferably of a continuous system. According to the batch system, units of an article to be sintered each in a predetermined amount are sintered one by one at intervals. According to the continuous system, units of an article to be sintered, such as a ceramic honeycomb structure, are continuously transported into the kiln main body, are heated inside thereof, and are continuously transported to the outside. By continuously carrying out sintering, the kiln main body 31 can constantly and stably yield combustion heat. Thus, the steam reforming apparatus 41 can stably carry out a methane reforming reaction using part of the combustion heat. This enables stable feeding of the hydrogen fuel 62 and thereby enables stable feeding of a mixed fuel 65 to the combustion device 51. The mixed fuel 65 is obtained by mixing the hydrogen fuel 62 and the hydrocarbon-containing fuel for mixing 64.

The combustion device 51 in the kiln 200 according to this embodiment shown in Fig. 3 is not specifically limited as long as it can efficiently burn the hydrocarbon-containing fuel 66. The combustion device 51 may be arranged outside of the kiln main body 31 and be configured to feed a combustion gas to the kiln main body 31 through a pipe. The combustion device 51 may also be arranged in the kiln main body 31. One or more units of the combustion device 51 may be arranged in the kiln main body 31, and the number thereof may be suitably set according to the capability of the combustion device 51 and the size of the kiln main body 31. The combustion device 51 is not specifically limited in its system as long as it is a burner having lines for introducing air and a fuel gas. For example, a regenerative burner configured to pre-heat air for combustion can advantageously be used.

The hydrogen separator 52 in the kiln 200 according to this embodiment shown in Fig. 3 is so configured to receive the reformed gas 61 formed in the steam reforming apparatus 41 and containing hydrogen and carbon dioxide, to separate hydrogen in the reformed gas 61 selectively, and to thereby yield a hydrogen fuel 62 mainly containing hydrogen and a residual gas 63 containing carbon dioxide. The hydrogen separator 52 is not specifically limited as long as it can separate hydrogen selectively from a mixed gas containing hydrogen. For example, the hydrogen separator 52 is preferably one including a cylindrical casing and a hydrogen-separating membrane housed in the cylindrical casing. The casing may include, for example, stainless steel. The hydrogen-separating membrane includes a membrane of palladium or an alloy containing palladium and is formed to have a cylinder-like form. The hydrogen-separating membrane as a cylinder is arranged in the cylindrical casing so that the inside space of the cylindrical hydrogen-separating membrane does not communicate with the outside space thereof. A mixed gas containing hydrogen is allowed to flow into the cylindrical casing and is then introduced into the inside of the cylindrical hydrogen-separating membrane; hydrogen is selectively allowed to permeate from the inside to the outside of the hydrogen-separating membrane; hydrogen flown out of the outside of the cylindrical hydrogen-separating membrane is allowed to flow as a hydrogen fuel 62 out of the cylindrical casing; and the remainder gas is allowed to pass as a residual gas 63 through the inside of the cylindrical hydrogen-separating membrane and to flow out of the cylindrical casing. The hydrogen separator may also be configured to introduce a mixed gas containing hydrogen to the outside of the cylindrical hydrogen-separating membrane and to allow hydrogen to flow into the inside of the cylindrical hydrogen-separating membrane. The separated hydrogen is used as a hydrogen fuel 62 mainly containing hydrogen. The residual gas 63 containing carbon dioxide is fed to the carbon dioxide fixator 53. The phrase "mainly containing hydrogen" in the "hydrogen fuel 62 mainly containing hydrogen" means that the fuel has a hydrogen content of 50 percent by volume or more. The casing is not necessarily cylindrical and can have any shape having a space inside thereof. For example, the casing may be in the form of a box. The hydrogen-separating membrane may be arranged on a surface or inside of a porous article including, for example, a ceramic, so as to have increased mechanical strength. The hydrogen-separating membrane is not necessarily cylindrical and can have any shape such as a flat shape.

The hydrogen separator 52 may be arranged integrally with the steam reforming apparatus 41 and may be configured so that hydrogen generated in the steam reforming apparatus 41 is selectively separated by the hydrogen separator 41 arranged in the steam reforming apparatus 41; and the separated hydrogen is fed as a hydrogen fuel 62 from the steam reforming apparatus 41. The hydrogen separator 52 may be arranged in the steam reforming apparatus 41, for example, by forming a hydrogen-separating membrane into a cylinder, arranging the cylindrical hydrogen-separating membrane in the steam reforming apparatus 41, and placing a reforming catalyst in the cylindrical hydrogen-separating membrane. In this case, the hydrogen-separating membrane functions as a hydrogen separator 52, and this means that the hydrogen separator 52 is arranged in the steam reforming apparatus 41. This enables such a configuration that a reforming material 69 is introduced into the cylindrical hydrogen-separating membrane to thereby yield hydrogen by the action of the reforming catalyst arranged in the cylindrical hydrogen-separating membrane, and the resulting hydrogen is allowed to flow out of the cylindrical hydrogen-separating membrane, and the hydrogen is used as a hydrogen fuel 62.

When hydrogen is separated from the reformed gas 61 by the action of the hydrogen separator 52, the efficiency of hydrogen separation is preferably such that the volume ratio of the amount of hydrogen contained in the reformed gas 61 to the amount of separated hydrogen is 50:50 to 1:99 (by volume). If the volume ratio is less than 50:50, a fuel may not be efficiently used. The higher the efficiency of hydrogen separation is the better. However, an efficiency of hydrogen separation of 1:99 (by volume) is enough as an efficiency for recovering hydrogen for combustion, and a higher efficiency of hydrogen separation may cause an increased cost.

The carbon dioxide fixator 53 in the kiln 200 according to this embodiment shown in Fig. 3 is configured to fix carbon dioxide contained in a residual gas 63 to thereby prevent gaseous carbon dioxide from being discharged to the outside. The residual gas 63 herein has been separated in the hydrogen separator 52. The carbon dioxide fixator 53 is not specifically limited as long as it is able to fix carbon dioxide contained in a residual gas 63 to thereby prevent gaseous carbon dioxide from being discharged to the outside. A preferred technique for carrying out fixation of carbon dioxide is as follows. An aqueous solution of sodium hydroxide as a fixating agent 67 for fixating carbon dioxide is placed in a predetermined vessel; a residual gas 63 is introduced into the vessel; and carbon dioxide contained in the residual gas 63 is reacted with sodium hydroxide to fix carbon dioxide while bubbling the aqueous sodium hydroxide solution with the residual gas 63. The "fixation of carbon dioxide" herein means that carbon dioxide is prevented from being discharged in the form of a gas to the outside by either making it react with other substances or making it absorbed into other substances.

When a substance (solution) containing sodium hydroxide, such as an aqueous sodium hydroxide solution, is used as a fixating agent 67 as described above, the carbon dioxide fixator 53 can be used as a sodium carbonate generator. This is because, sodium carbonate is formed in the carbon dioxide fixator 53, and a waste liquid 68 discharged from the carbon dioxide fixator 53 is a solution containing sodium carbonate. Next, the carbon dioxide fixator 53 will be described in further detail by taking the use as a sodium carbonate generator as an example.

The predetermined vessel for constituting the carbon dioxide fixator 53 may have any structure as long as it can contain sodium hydroxide and allow sodium hydroxide to react with carbon dioxide to yield sodium carbonate. The vessel can be, for example, a cylindrical vessel having at least one inlet tube for introducing a residual gas and sodium hydroxide, and having a discharging section for discharging a waste liquid (hereinafter also referred to as "sodium carbonate-containing solution"). The vessel can have any shape not specifically limited and can be, for example, a round cylindrical vessel, a polygonal cylinder (including box-shaped vessel) having, for example, a tetragonal bottom, or a cylindrical vessel (including box-shaped vessel) having an irregular bottom. Where necessary, the carbon dioxide fixator 53 may further include a stirrer, or a jacket and/or a coil for heating and/or cooling. The carbon dioxide fixator 53 may be of a batch system or of a semi-batch system. According to the batch system, the carbon dioxide fixator 53 includes one vessel; the residual gas is stopped to be fed at the time when substantially all of sodium hydroxide is reacted; a sodium carbonate-containing solution is discharged; another portion of sodium hydroxide is placed in the vessel; and feeding of the residual gas is started again. According to the semi-batch system, the carbon dioxide fixator 53 includes two or more vessels; feeding of a residual gas is switched from one vessel to another vessel so as to start the formation of sodium carbonate in the other vessel at the time when substantially all of sodium hydroxide is reacted in the one vessel; and a sodium carbonate-containing solution in the one vessel, where substantially all of sodium hydroxide is reacted, is discharged during the formation of sodium carbonate in the other vessel.

Carbon dioxide may be fixated to yield sodium carbonate, for example, by using an aqueous sodium hydroxide solution as a fixating agent 67, circulating the aqueous sodium hydroxide solution, feeding the residual gas 63 into the circulating aqueous sodium hydroxide solution, mixing them, and thereby reacting sodium hydroxide with carbon dioxide. After the formation of sodium carbonate, the aqueous sodium hydroxide solution further contains sodium carbonate. The aqueous sodium hydroxide solution may be circulated, for example, by placing the aqueous sodium hydroxide solution in a vessel, allowing the vessel to discharge the aqueous sodium hydroxide solution through a pipe, and returning the discharged aqueous sodium hydroxide solution into the vessel using a pump. In this configuration, the carbon dioxide fixator 53 may continuously be operated by continuously feeding sodium hydroxide to the system of circulating an aqueous solution containing sodium hydroxide and sodium carbonate formed as a result of a reaction, and extracting a continuously circulating aqueous solution containing sodium carbonate from the circulation system as a sodium carbonate-containing solution (waste liquid) 68.

When the carbon dioxide fixator 53 is used as a sodium carbonate generator, the carbon dioxide content of the residual gas 63 after the separation of hydrogen from the reformed gas 61 by the action of the hydrogen separator 52 is preferably 15 to 99.9 percent by mass, and more preferably 60 percent by mass or more. If the carbon dioxide content is less than 15 percent by mass, the residual gas 63 may contain a large quantity of impurities. Thus, a sufficiently highly pure sodium carbonate may not be obtained from the waste liquid (sodium carbonate-containing solution) 68 discharged from the carbon dioxide fixator 53. A converter (carbon monoxide converter) may be arranged when the carbon dioxide content of the residual gas 63 is low or when it is desirable to increase the carbon dioxide content of a residual gas 63. In this case, a residual gas 63 discharged from the hydrogen separator 52 is fed to the converter, is converted therein, and the resulting residual gas 63 having an increased carbon dioxide content is fed into the carbon dioxide fixator 53.

The steam reforming apparatus 41 may yield carbon monoxide as a by-product. When a residual gas 63 contains a large amount of the by-produced carbon monoxide, the kiln may further include a carbon monoxide converter and may be configured to feed the residual gas 63 to the carbon monoxide converter. The carbon monoxide converter is preferably one which is configured to adjust the residual gas 63 to have a temperature of 350°C to 360°C, to bring the adjusted residual gas 63 into contact with an iron-chromium (Fe-Cr) catalyst in the converter, and to thereby convert carbon monoxide. The carbon monoxide converter in this case is configured to yield carbon dioxide and hydrogen from carbon monoxide and water as materials. This converts carbon monoxide in the residual gas 63 into carbon dioxide and thereby reduces the carbon monoxide content of the residual gas 63. The residual gas 63 having a reduced carbon monoxide content can be fed into the carbon dioxide fixator 53. The carbon monoxide converter yields hydrogen in addition to carbon dioxide. Accordingly, the kiln may be configured to feed the residual gas 63 from the carbon monoxide converter to a hydrogen separator, to thereby separate hydrogen, and to mix the separated hydrogen with the mixed fuel 65. In this configuration, the kiln may be configured to arrange another hydrogen separator and to feed all the residual gas 63 to the hydrogen separator. Alternatively, it may be configured to circulate part of the residual gas 63 by extracting part of the residual gas 63 and feeding the part together with the reformed gas 61 to the hydrogen separator 52. The residual gas 63 which has been converted and has an increased carbon dioxide content is fed to the carbon dioxide fixator 53. When the converted residual gas 63 is fed to a hydrogen separator, the residual gas 63 after discharged from the hydrogen separator is fed to the carbon dioxide fixator 53.

Further, in the case that carbon monoxide still remains in the residual gas 63 after the residual gas is converted with the above-mentioned carbon monoxide converter, or that the residual gas 63 wherein carbon monoxide remains therein is not subjected to conversion, carbon monoxide which has remained in the residual gas 63 is contained as it is in an exhaust gas (an exhaust gas from carbon dioxide fixator), which is exhausted from the carbon dioxide fixator 53 after carbon dioxide is subjected to reaction when the residual gas 63 is flown into the carbon dioxide fixator 53. It is preferable, as a method for treating the carbon monoside contained in the exhaust gas exhausted from the carbon dioxide fixator, to burn the carbon monoxide contained in the exhaust gas exhausted from the carbon dioxide fixator with combustion device 51 by mixing it with the mixed fuel 65. In that case, it is preferred, in the case that hydrogen is contained in the exhaust gas exhausted from the carbon dioxide fixator, that hydrogen is also burnt as a fuel by the combustion device 51.

Sodium hydroxide in the carbon dioxide fixator 53 may be dispersed as droplets, and the droplets may be contained in a carbon dioxide fixator exhaust gas. When the carbon dioxide fixator exhaust gas is mixed with the mixed fuel 65, sodium hydroxide contained therein may contaminate and corrode the kiln main body 31. Accordingly, sodium hydroxide is preferably removed before burning when the carbon dioxide fixator exhaust gas is mixed with the mixed fuel 65 and is burnt. The removal of sodium hydroxide may be carried out before or after the mixing of the carbon dioxide fixator exhaust gas with the mixed fuel 65. For example, the kiln may be configured to feed the carbon dioxide fixator exhaust gas to a sodium hydroxide remover (not shown) to thereby remove sodium hydroxide before mixing the exhaust gas with the mixed fuel 65. The sodium hydroxide remover can be, for example, a trap filled with water. Such a sodium hydroxide remover is preferably arranged in piping.

Carbon dioxide in the residual gas 63 may not fully be reacted in the carbon dioxide fixator 53, and unreacted carbon dioxide may remain in a carbon dioxide fixator exhaust gas. In this case, the kiln is preferably configured to extract part of the carbon dioxide fixator exhaust gas and to feed the extracted part to the carbon dioxide fixator 53 again. This reduces the residual carbon dioxide. Alternatively or in addition, the kiln may further include another (second) carbon dioxide fixator and be configured to feed the carbon dioxide fixator exhaust gas to the second carbon dioxide fixator to thereby yield sodium carbonate. This further reduces the residual carbon dioxide.

As is described above, there are the process of treating the residual gas 63 with a carbon monoxide converter, the process of mixing a carbon dioxide fixator exhaust gas with the mixed fuel 65, and the process of feeding a carbon dioxide fixator exhaust gas to a carbon dioxide fixator. Each of these processes can be used alone or in combination for optimal conditions of respective processes in accordance with the carbon monoxide content of the residual gas 63, and the carbon monoxide content and the carbon dioxide content of the carbon dioxide fixator exhaust gas.

To yield high-purity sodium carbonate, a waste liquid (sodium carbonate-containing solution) 68 is preferably subjected to a sodium carbonate purifying step (not shown). The waste liquid (sodium carbonate-containing solution) 68 contains sodium carbonate formed in the carbon dioxide fixator 53 and has been discharged from the carbon dioxide fixator 53. In this case, the sodium carbonate content of the sodium carbonate-containing solution 68 formed in the carbon dioxide fixator 53 is preferably 80 to 99.9 percent by mass, and more preferably 95 percent by mass or more, relative to the other components of the sodium carbonate-containing solution 68 than water. If the sodium carbonate content is less than 80 percent by mass, it is difficult to yield a satisfactorily high-purity sodium carbonate in the sodium carbonate purifying step (not shown).

Sodium hydroxide to be reacted with carbon dioxide in the carbon dioxide fixator 53 preferably has a high purity, so as to yield highly purified sodium carbonate. Specifically, the sodium hydroxide content of the fixating agent 67 to be placed in the carbon dioxide fixator 53 is preferably 80 to 99.9 percent by mass and more preferably 95 percent by mass or more, relative to the other components of the fixating agent 67 than water (with respect to the total mass of the fixating agent 67 when the fixating agent 67 contains no water). If the sodium hydroxide content is less than 80 percent by mass, it may be difficult to yield satisfactorily highly purified sodium carbonate. The fixating agent 67 may be an aqueous sodium hydroxide solution as is described above, but it may also be molten sodium hydroxide. When an aqueous sodium hydroxide solution is used as the fixating agent 67, the sodium hydroxide content of the aqueous solution is preferably 30 to 95 percent by mass based on the total mass of the aqueous solution. If the sodium hydroxide content is less than 30 percent by mass, sodium hydroxide in such a low concentration may not efficiently react with carbon dioxide and the carbon dioxide fixator exhaust gas may contain residual carbon dioxide in a high content. If the sodium hydroxide content is higher than 95 percent by mass, the aqueous sodium hydroxide solution may have an excessively high viscosity and poor flowability and may not efficiently react with carbon dioxide.

When the sodium carbonate-containing solution 68 discharged from the carbon dioxide fixator 53 is subjected to a purification step (not shown) to yield purified sodium carbonate, the purity of resulting sodium carbonate is preferably 98 to 99.9 percent by mass and more preferably 99.0 percent by mass or more. Such high-purity sodium carbonate having a purity of 98 percent by mass or more can be used in fields where high-purity sodium carbonate is desirable as a raw material, such as optical glass and pharmaceutical drugs. The higher the purity of sodium carbonate is the better. The sodium carbonate content of the sodium carbonate-containing solution 68 is preferably 60 to 95 percent by mass based on the total mass of the sodium carbonate-containing solution 68. If the sodium carbonate content is less than 60 percent by mass, sodium carbonate in such a low concentration may not efficiently yield sodium carbonate crystals. If the sodium carbonate content is higher than 95 percent by mass, a slurry containing sodium carbonate crystals may have an excessively high concentration and poor flowability when sodium carbonate is crystallized in a crystallizer.

When the sodium carbonate-containing solution 68 discharged from the carbon dioxide fixator 53 is subjected to purification, the purification process is preferably a process in which sodium carbonate crystals are crystallized from the sodium carbonate-containing solution 68, and the crystallized sodium carbonate is separated from a mother liquor to thereby extract the sodium carbonate crystals. This purification process is preferably carried out by a purification step (not shown) using a crystallizer (not shown) and a filter (not shown). The crystallizer is configured to crystallize sodium carbonate crystals from the sodium carbonate-containing solution 68. The filter is configured to separate the sodium carbonate crystals crystallized in the crystallizer from a mother liquor.

The fuel cell 54 in the kiln 200 according to this embodiment shown in Fig. 3 can be a commercially available system. The fuel cell 54 can be any fuel cell such as a solid polymer fuel cell, a phosphoric acid fuel cell, a molten carbonate fuel cell, or a solid oxide fuel cell. It is preferably a phosphoric acid fuel cell, a molten carbonate fuel cell, or a solid oxide fuel cell because the waste heat in this system stands at high temperatures. Current commercially-available fuel cell systems can generate electricity at about 100 KW to about 2000 KW per one system. The power, however, can freely be designed, for example, by arranging a plurality of fuel cell systems in parallel. The kiln 200 may be so configured as to feed part of the hydrogen fuel 62 as a hydrogen material 70 for fuel cell through a pipe to the fuel cell 54 and to generate electricity in the fuel cell 54 by reacting the hydrogen material 70 for fuel cell with air (oxygen in the air) or by reacting the hydrogen material 70 for fuel cell with oxygen and with carbon dioxide.

### Industrial Applicability

According to the present invention a steam reforming apparatus is arranged in an industrial furnace and/or in a passage for exhaust gas. In particular, it is advantageously arranged in a kiln and/or in an exhaust gas discharging section. The kiln is configured to sinter, for example, ceramics in the ceramic industry, and the exhaust gas discharging section is configured to act as a passage for a combustion gas discharged from a kiln main body. Thus, part of the combustion heat generated in the industrial furnace (kiln) can efficiently be recovered. According to a preferred embodiment of the present invention, carbon dioxide contained in an exhaust combustion gas can be reduced to thereby reduce the amount of carbon dioxide to be released into the atmosphere. In addition, a fuel cost can be reduced. Electric generation in a fuel cell can be carried out by recovering and reusing the heat energy of the exhaust combustion gas.

## Claims

1. An industrial furnace having
a combustion device (51),
a main body (1) for heating an article to be sintered or an article to be burnt by means of combustion heat of a gas combusted in said combustion device (51), to sinter or burn the article and to discharge the combusted gas after the sintering or burning,
an exhaust gas discharging section (6) configured to act as a flow passage for the hot combusted gas discharged from the main body (1),
a steam reforming apparatus (21) in said furnace and for performing a steam reforming reaction on hydrocarbon and steam to be fed thereto as raw materials to undergo the steam reforming reaction, the steam reforming apparatus having
a low temperature reforming section (23) having first tubular reactors (25) housing a reforming catalyst for accelerating a steam reforming reaction, and
a high temperature reforming section (22) having second tubular reactors (24),
wherein
said low temperature reforming section (23) has a plurality of said first tubular reactors (25) which are metal and are arranged in parallel and first and second metal tubes (29) to which the ends of the first tubular reactors (25) are connected respectively for supply and discharge of the gases undergoing the reforming reaction to and from said first tubular reactors (25),
said high temperature reforming section (22) has a plurality of said second tubular reactors (24) which are ceramic and are arranged in parallel, and first and second ceramic tubes (28) to which the ends of the second tubular reactors (24) are connected respectively for supply and discharge of the gases undergoing the reforming reaction to and from said second tubular reactors (24), and
said steam reforming apparatus (21) is arranged in a heat-recovering section (5) of the furnace main body (1) or in the exhaust gas discharging section (6), with said low temperature reforming section (23) and said high temperature reforming section (22) in respectively low temperature and high temperature zones,
said metal tubes (29) and said ceramic tubes (28) being connected to a reforming material inlet tube (26) and a reformed gas outlet tube (27) whereby said low temperature reforming section and said high temperature reforming section are arranged for flow of the reaction gases in parallel through them.

2. An industrial furnace according to claim 1, wherein the ceramic tubular reactor (24) comprises at least one material selected from silicon nitride, silicon carbide, aluminum nitride, aluminum oxide and zirconium oxide.

3. A method of operating the furnace of claim 1 or 2 for steam reforming,
wherein the steam reforming apparatus is arranged in the industrial furnace so that the low-temperature reforming section is arranged in such a location as to have a temperature of 600°C or higher and lower than 1000°C by the action of a combustion heat of the industrial furnace and that the high-temperature reforming section is arranged in such a location as to have a temperature of 1000°C or higher and 1800°C or lower by the action of the combustion heat of the industrial furnace.

## Patentansprüche

1. Industrieofen, der Folgendes aufweist:
eine Verbrennungsvorrichtung (51),
einen Hauptkörper (1), um einen zu sinternden oder zu brennenden Gegenstand durch die Verbrennungshitze eines in der Verbrennungsvorrichtung (5!) verbrannten Gases zu erhitzen, um den Gegenstand zu sintern oder zu brennen und das verbrannte Gas nach dem Sintern oder Brennen auszustoßen,
einen Abgasausstoßabschnitt (6), der ausgebildet ist, um als Strömungsdurchlass für das heiße verbrannte Gas zu dienen, das aus dem Hauptkörper (1) ausgestoßen wird,
eine Dampfreformierungsvorrichtung (21) in dem Ofen zur Durchführung einer Dampfreformierungsreaktion ausgehend von Kohlenwasserstoff und Dampf, die dieser als Rohmaterialien zugeführt werden, um der Dampfreformierungsreaktion unterzogen zu werden, wobei die Dampfreformierungsvorrichtung Folgendes aufweist:
einen Niedertemperaturreformierungsabschnitt (23) mit ersten röhrenförmigen Reaktoren (25), die einen Reformierungskatalysator zur Beschleunigung der Dampfreformierungsreaktion aufnehmen und
einen Hochtemperaturreformierungsabschnitt (22) mit zweiten röhrenförmigen Reaktoren (24),
worin
der Niedertemperaturreformierungsabschnitt (23) eine Vielzahl der ersten röhrenförmigen Reaktoren (25), die aus Metall bestehen und parallel vorliegen, und erste und zweite Metallrohre (29) aufweist, mit denen die Enden der ersten röhrenförmigen Reaktoren (25) jeweils verbunden sind, um die Gase, die der Reformierungsreaktion unterzogen werden, in die ersten röhrenförmigen Reaktoren (25) zuzuführen und aus diesen abzuführen,
der Hochtemperaturreformierungsabschnitt (22) eine Vielzahl der zweiten röhrenförmigen Reaktoren (24), die aus Keramik bestehen und parallel vorliegen, und erste und zweite Keramikrohre (28) aufweist, mit denen die Enden der zweiten röhrenförmigen Reaktoren (24) jeweils verbunden sind, um die Gase, die der Reformierungsreaktion unterzogen werden, in die zweiten röhrenförmigen Reaktoren (24) zuzuführen und aus diesen abzuführen, und
die Dampfreformierungsvorrichtung (21) in einem Wärmerückgewinnungsabschnitt (5) des Ofenhauptkörpers (1) oder in dem Abgasausstoßabschnitt (6) angeordnet ist, wobei der Niedertemperaturreformierungsabschnitt (23) und der Hochtemperaturreformierungsabschnitt (22) jeweils in einem Bereich mit niedriger bzw. hoher Temperatur vorliegen,
die Metallrohre (29) und die Keramikrohre (28) mit einem Reformierungsmaterialeinlassrohr (26) und einem Auslassrohr (27) für das reformierte Gas verbunden sind, wobei der Niedertemperaturreformierungsabschnitt und der Hochtemperaturreformierungsabschnitt derart angeordnet sind, dass das Strömen der Reaktionsgase durch diese hindurch parallel erfolgt.

2. Industrieofen nach Anspruch 1, worin der röhrenförmige Keramikreaktor (24) zumindest ein aus Siliciumnitrid, Siliciumcarbid, Aluminiumnitrid, Aluminiumoxid und Zirconiumoxid ausgewähltes Material umfasst.

3. Verfahren zum Betrieb eines Ofens nach Anspruch 1 oder 2 zur Dampfreformierung,
wobei die Dampfreformierungsvorrichtung in dem Industrieofen so angeordnet ist, dass der Niedertemperaturreformierungsabschnitt an einem solchen Ort vorliegt, dass er unter Einwirkung der Verbrennungswärme des Industrieofens eine Temperatur von 600 °C oder mehr und weniger als 1.000 °C aufweist, und dass der Hochtemperaturreformierungsabschnitt an einem solchen Ort vorliegt, dass er unter Einwirkung der Verbrennungswärme des Industrieofens eine Temperatur von 1.000 °C oder mehr und von 1.800 °C oder weniger aufweist.

## Revendications

1. Four industriel ayant :
un dispositif de combustion (51),
un corps principal (1) pour chauffer un article à fritter ou un article à faire brûler au moyen de la chaleur de combustion d'un gaz brûlé dans ledit dispositif de combustion (51), pour fritter ou brûler l'article et décharger le gaz brûlé après le frittage ou la combustion,
une section de décharge de gaz d'échappement (6) configurée pour servir de passage d'écoulement des gaz brûlés chauds déchargés à partir du corps principal (1),
un appareil de reformage à la vapeur (21) dans ledit four et pour réaliser une réaction de reformage à la vapeur sur des hydrocarbures et la vapeur à amener à ce dernier sous forme de matières premières pour subir la réaction de reformage à la vapeur, l'appareil de reformage à la vapeur ayant :
une section de reformage à basse température (23) ayant des premiers réacteurs tubulaires (25) formant un catalyseur de reformage pour accélérer une réaction de reformage à la vapeur, et
une section de reformage à haute température (22) ayant des seconds réacteurs tubulaires (24),
dans lequel :
ladite section de reformage à basse température (23) a une pluralité de premiers réacteurs tubulaires (25) qui sont métalliques et sont agencés en parallèle et des premier et second tubes métalliques (29) auxquels les extrémités des premiers réacteurs tubulaires (25) sont raccordées respectivement pour l'alimentation et la décharge des gaz subissant la réaction de reformage dans et desdits premiers réacteurs tubulaires (25),
ladite section de reformage à haute température (22) a une pluralité desdits seconds réacteurs tubulaires (24) qui sont en céramique et agencés en parallèle, et des premier et second tubes en céramique (28) auxquels les extrémités des seconds réacteurs tubulaires (24) sont raccordées respectivement pour l'alimentation et la décharge des gaz subissant la réaction de reformage dans et desdits seconds réacteurs tubulaires (24), et
ledit appareil de reformage à la vapeur (21) est agencé dans une section de récupération de chaleur (5) du corps principal (1) de four ou dans la section de décharge de gaz d'échappement (6), avec ladite section de reformage à basse température (23) et ladite section de reformage à haute température (22) respectivement dans les zones à basse température et à haute température,
lesdits tubes métalliques (29) et lesdits tubes en céramique (28) étant raccordés à un tube d'entrée de matière de reformage (26) et à un tube de sortie de gaz reformé (27), moyennant quoi ladite section de reformage à basse température et ladite section de reformage à haute température sont agencées pour l'écoulement des gaz de réaction en parallèle à travers ces derniers.

2. Four industriel selon la revendication 1, dans lequel le réacteur tubulaire en céramique (24) comprend au moins un matériau choisi parmi le nitrure de silicium, le carbure de silicium, le nitrure d'aluminium, l'oxyde d'aluminium et l'oxyde de zirconium.

3. Procédé pour faire fonctionner le four selon la revendication 1 ou 2 pour le reformage à la vapeur,
dans lequel l'appareil de reformage à la vapeur est agencé dans le four industriel de sorte que la section de reformage à basse température est agencée dans un emplacement tel qu'elle a une température de l'ordre de 600°C ou supérieure et inférieure à 1 000°C grâce à l'action d'une chaleur de combustion du four industriel et de sorte que la section de reformage à haute température est agencée dans un emplacement tel qu'elle a une température de l'ordre de 1 000°C ou supérieure et 1 800°C ou inférieure grâce à l'action de la chaleur de combustion du four industriel.
